# EUROPÄISCHE PATENTSCHRIFT

(11) **EP 3 074 953 B1**
(45) Veröffentlichungstag und Bekanntmachung des Hinweises auf die Patenterteilung: **26.02.2020**
(21) Anmeldenummer: 14777596.9
(22) Anmeldetag: 30.09.2014
(51) Int. Cl.: G06T 15/04

(54) **VERFAHREN ZUR GENERIERUNG EINER DREIDIMENSIONALEN ANSICHT**
METHOD FOR GENERATING A THREE-DIMENSIONAL VIEW
PROCÉDÉ DE GÉNÉRATION D'UNE VUE TRIDIMENSIONNELLE

(30) Priorität: 26.11.2013 DE 102013224162
(43) Veröffentlichungstag der Anmeldung: 05.10.2016
(73) Patentinhaber: Robert Bosch GmbH, 70442 Stuttgart (DE)
(72) Erfinder: ABRAHAM, Steffen, 31134 Hildesheim (DE)
(86) Internationale Anmeldenummer: PCT/EP2014/070887
(87) Internationale Veröffentlichungsnummer: WO 2015/078616

(56) Entgegenhaltungen:
- ULRICH NEUMANN ET AL: "Immersive panoramic video", PROCEEDINGS OF THE EIGHTH ACM INTERNATIONAL CONFERENCE ON MULTIMEDIA , MULTIMEDIA '00, 30. Oktober 2000 (2000-10-30), Seiten 493-494, XP055162203, New York, New York, USA DOI: 10.1145/354384.376408 ISBN: 978-1-58-113198-7
- GHAZANFARPOUR D ET AL: "A high-quality filtering using forward texture mapping", COMPUTERS AND GRAPHICS, ELSEVIER, GB, Bd. 15, Nr. 4, 1991, Seiten 569-577, XP026650001, ISSN: 0097-8493, DOI: 10.1016/0097-8493(91)90058-P [gefunden am 1991-01-01]
- BAOQUAN CHEN ET AL: "Forward image mapping", VISUALIZATION '99. PROCEEDINGS SAN FRANCISCO, CA, USA 24-29 OCT. 1999, IEEE, PISCATAWAY, NJ, USA, 29. Oktober 1999 (1999-10-29), Seiten 89-514, XP031385531, ISBN: 978-0-7803-5897-3

## Beschreibung

### Stand der Technik

Die vorliegende Erfindung betrifft ein Verfahren zur Generierung einer dreidimensionalen Darstellung. Ebenfalls betrifft die Erfindung ein Computerprogrammprodukt zur Ausführung des Verfahrens und ein Steuergerät, auf dem das Verfahren ausführbar ist.

Aus dem Stand der Technik sind Verfahren zum Generieren von zweidimensionalen großen Bildern bekannt. Beispielsweise offenbart der Aufsatz von Ulrich Neumann et. al.: "Immersive panoramic video", PROCEEDINGS OF THE EIGHTH ACM INTERNATIONAL CONFERENCE ON MULTIMEDIA, MULTIMEDIA '00, 30. Oktober 2000, Seiten 493-494, New York" das Erzeugen von Panorama-Ansichten mittels Zusammenfügen mehrerer aufgenommener Bilder. Weiterhin sind aus dem Stand der Technik sind Video-Surroundview-Systeme bekannt. So offenbart die JP-2012073836-A ein Fahrzeug, das insgesamt vier Kameras umfasst. Diese vier Kameras erfassen eine Umgebung des Fahrzeugs, wobei einem Fahrer des Fahrzeugs diese Szenerie durch eine dreidimensionale Darstellung zur Verfügung gestellt werden soll.

Die dreidimensionale Darstellung wird durch eine Projektion der Texturen, die mit den Kameras aufgenommen wurden, auf eine virtuelle Projektionsfläche in Form einer Schale realisiert. Die Projektionsfläche mit der projizierten Textur wird anschließend für die Darstellung in einem Bildschirm (Display) über einen Graphikprozessor in eine Bildschirmabbildung gerendert.

Für die technische Umsetzung in einem Graphikprozessor besteht die virtuelle Projektionsfläche aus einem regelmäßigen oder annähernd regelmäßigen dreidimensionalen Netz. Die Knoten des Netzes besitzen die 3D-Koordinaten xk=(xk,yk,zk). Für das Rendern über die Graphikeinheit werden zu jedem 3D-Knoten des Netzes der virtuellen Projektionsfläche Texturkoordinaten xt=(xt,yt) berechnet. Dazu werden die Knoten xk des dreidimensionalen Netzes in die 2D-Texturkoordinaten xt projiziert. Diese mathematische Projektion xt=P(xk) beschreibt die geometrische Abbildung der virtuellen Projektionsfläche in eine entsprechende Kamera. Unter Nutzung der 3D-Koordinaten xk und der Texturkoordinaten xt kann jetzt ein schnelles hardwareunterstütztes Rendern der virtuellen Projektionsfläche unter Verwendung der Graphikeinheit in eine Displaydarstellung erfolgen.

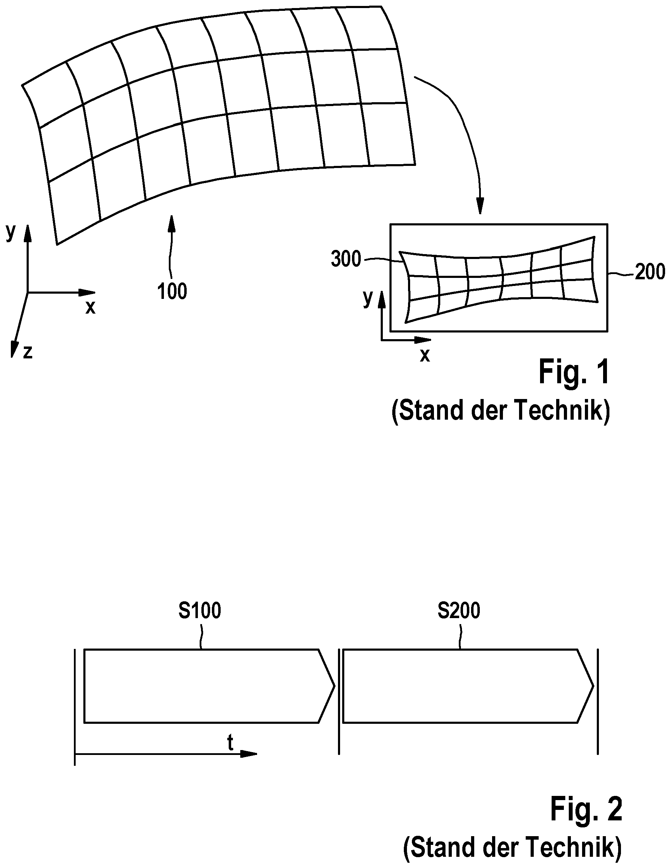

Das Vorgehen im Stand der Technik hat den Nachteil, dass zur Berechnung der Projektion sehr oft auf einen Texturspeicher zurückgegriffen werden muss. Das Problem ist in Figur 1 verdeutlicht. Die Projektionsfläche besteht aus einem regelmäßigen dreidimensionalen Netz 100. Im Bezug auf die Texturen 200 ergibt sich aus diesem regelmäßigen dreidimensionalen Netz 100 ein unregelmäßiges zweidimensionales Netz 300. Somit muss während des Renderns auf verschiedenste Teile des Texturspeichers zurückgegriffen werden, da die einzelnen Texturbestandteile dem dreidimensionalen Netz 100 zuzuordnen sind.

Der Stand der Technik verlangt daher, dass sämtliche für den Rendervorgang benötigte Texturen in dem Texturspeicher abgelegt sind, um während des Renderns auf diese zugreifen zu können. Dies benötigt einerseits einen hohen Speicherbedarf, andererseits entsteht eine Verzögerung zwischen Aufnahme der Texturen durch die Kameras und Rendern der dreidimensionalen Darstellung. Schließlich kann ein Grafikprozessor, der für den Rendervorgang bereitgestellt ist, nicht optimal ausgenutzt werden, da hierfür ein sequenzieller Zugriff auf den Texturspeicher nötig wäre. Jedoch ist der Zugriff nicht sequentiell sondern unregelmäßig.

### Offenbarung der Erfindung

Die Erfindung wird durch die unabhängigen Ansprüche definiert. Das erfindungsgemäße Verfahren zum Generieren einer dreidimensionalen Darstellung einer Szenerie umfasst die folgenden Schritte: Zunächst wird die Szenerie mit einer Vielzahl von Kameras aufgenommen. Die Kameras weisen insbesondere verschiedene Blickrichtungen auf die Szenerie auf. Dabei werden die von den Kameras aufgenommen Texturen als zweidimensionale Bilder in einem Texturspeicher gespeichert. Bevorzugt sind die zweidimensionalen Bilder Teil eines Videostreams, so dass die dreidimensionale Darstellung keine starre sondern eine dynamische Darstellung der Szenerie ist. Außerdem wird ein virtuelles Netz bereitgestellt, das eine virtuelle dreidimensionale Projektionsfläche bildet. Das virtuelle Netz definiert bevorzugt eine Vielzahl von zweidimensionalen Projektionskörpern, die durch die Maschen des Netzes gebildet werden. Die Projektionskörper weisen jeweils eine Oberfläche auf, wobei alle Oberflächen der Projektionskörper zusammen die Projektionsfläche bilden. Anschließend wird eine dreidimensionale Ansicht der Szenerie gerendert. Dies geschieht dadurch, dass die von jeder Kamera bestimmten Texturen auf das virtuelle Netz projiziert werden. Auf diese Weise wird ein Blickwinkel auf die Textur derart verändert, dass ein räumlicher Eindruck entsteht. Erfindungsgemäß ist das virtuelle Netz derart gestaltet, dass bei der Projektion der Texturen auf das virtuelle Netz vordefinierte Texturkoordinaten der Texturen auf Knotenpunkte des virtuellen Netzes abgebildet werden. Die vordefinierten Texturkoordinaten sind gleichmäßig angeordnet, so dass diese insbesondere einen konstanten Abstand zueinander einnehmen. Durch die regelmäßige Anordnung der Texturkoordinaten ist insbesondere ein Zugriff auf Teile der Texturen sehr aufwandsarm möglich. Eine Position, an die eine Textur auf das virtuelle Netz projiziert wird, wird bevorzugt in Abhängigkeit von einer Position der Kamera bestimmt, mit der die Textur aufgenommen wurde. Alternativ oder zusätzlich wird die Position in Abhängigkeit von einem Blickwinkel der Kamera bestimmt.

Die Unteransprüche zeigen bevorzugte Weiterbildungen der Erfindung.

Vorteilhafterweise sind die Texturkoordinaten Knotenpunkte eines regulären zweidimensionalen Koordinatennetzes. Dies vereinfacht den Zugriff auf die Texturen, da diese durch regelmäßige Koordinaten beschrieben werden können. Dies ermöglicht insbesondere einen vereinfachten Zugriff auf den Texturspeicher, da dieser sequenziell ausgelesen wird. Das sequenzielle Auslesen ist nur durch das reguläre Koordinatennetz möglich, indem sequenziell die einzelnen Netzabschnitte ausgelesen werden.

Das erfindungsgemäße Verfahren wird bevorzugt derart ausgeführt, dass die Projektion der Texturen auf das virtuelle Netz derart durchgeführt wird, dass die zu projizierende Textur verzerrt wird. Auf diese Weise wird die Textur in die dreidimensionale Ansicht eingefügt. Bei der besonders bevorzugten Verwendung des Koordinatennetzes wird die Textur derart verzerrt, dass das mit der Textur zusammen verzerrte Koordinatennetz dieselbe Form wie das virtuelle Netz aufweist.

Bei dem Aufnehmen von Bildern mit den Kameras und dem, insbesondere sequentiellen, Speichern der Bilder in dem Texturspeicher kann es vorkommen, dass zu einem Zeitpunkt Teilbereiche der Texturen bereits in dem Texturspeicher ablegt sind und andere Teilbereiche erst noch übertragen werden müssen. Um ein schnelles Rendern zu ermöglichen ist es bevorzugt vorgesehen, dass das Rendern bereichsweise geschieht. So werden bevorzugt verfügbare Bereiche der Texturen gerendert. Daher muss nicht abgewartet werden, bis die zu rendernde Textur vollständig in dem Texturspeicher vorhanden ist. Die Bereiche sind insbesondere einzelne Zeilen der Textur. Alternativ sind die Bereiche bevorzugt Spalten der Textur.

Für die Generierung der dreidimensionalen Ansicht sind mehrere Kameras nötig. Die Texturen der unterschiedlichen Kameras werden in dem Texturspeicher bevorzugt verschachtelt gespeichert. Dies erlaubt eine effiziente Speicherung, wobei insbesondere kein zusätzlicher Puffer für den Texturspeicher benötigt wird. Das Rendern findet bevorzugt ebenso verschachtelt statt, indem jeweils identische Teilbereiche der Texturen der unterschiedlichen Kameras sequenziell gerendert werden. So wird insbesondere zunächst ein Teilbereich einer ersten Textur gerendert, anschließend der korrespondierende Teilbereich einer zweiten Textur, dann der korrespondierende Teilbereich einer dritten Textur, solange bis die letzte zu rendernde Textur erreicht ist. Anschließend wird mit einem zweiten Teilbereich der ersten Textur erneut begonnen.

Bevorzugt beschreibt das virtuelle Netz eine virtuelle dreidimensionale Form einer Schale. Eine derartige Form erlaubt ein einfaches und schnelles Generieren einer dreidimensionalen Ansicht.

Weiterhin besteht das virtuelle Netz bevorzugt aus Dreiecken, deren Eckpunkte jeweils den Knotenpunkten des Netzes entsprechen. Vorteilhafterweise ist auch die Verwendung anderer Polygone möglich. Die Verwendung von Dreiecken für derartige virtuelle Netze hat sich für dreidimensionale Darstellungen bewährt.

In einer vorteilhaften Ausführungsform der Erfindung werden zusätzliche dreidimensionale Objekte in die dreidimensionale Darstellung eingefügt. Diese Objekte sind insbesondere eine Repräsentation eines Ego-Fahrzeugs oder die Darstellung sonstiger Objekte aus der Szenerie. Die zusätzlichen dreidimensionalen Objekte werden vorteilhafterweise vor dem Rendern der dreidimensionalen Ansicht erzeugt. Während dieser Zeit wird der Texturspeicher mit Texturen gefüllt, die für den Rendervorgang notwendig sind. Vorteilhaft dabei ist, dass das Rendern der zusätzlichen Objekte nahezu keine Zeitverzögerung für das Rendern der dreidimensionalen Ansicht mit sich bringt.

Die Erfindung betrifft weiterhin ein Computerprogrammprodukt. Das Computerprogrammprodukt umfasst einen maschinenlesbaren Code, durch den das zuvor beschriebene Verfahren ausführbar ist, wenn das Computerprogrammprodukt auf einer Recheneinheit abläuft. Als Recheneinheit ist hier insbesondere ein Steuergerät anzusehen.

Schließlich betrifft die Erfindung ein Steuergerät, das insbesondere in einem Fahrzeug einsetzbar ist. Das Steuergerät ist bevorzugt eingerichtet, das zuvor beschriebene Verfahren auszuführen.

Vorteilhafterweise werden die Texturkoordinaten xt=(xt,yt) als regelmäßiges zweidimensionales Gitter ausgebildet. Die Inversion der mathematischen Projektion xt=P(xk) ergibt zu jeder Texturkoordinate xt einen geometrischen Strahl xs=xc+λxr im 3D-Raum, d.h. (xs,ys,zs)=(xc,yc,zc)+λ (xr,yr,zr). Bei einer mathematischen Beschreibung der Kameras als Lochkamera entspricht der Vektor xc der Position des Projektionszentrums der Kamera und der Vektor xr einem Richtungsvektor, der die Gerade vom Projektionszentrum xc zum 3D-Knoten eines Knotens der virtuellen Projektionsfläche beschreibt. Der Faktor λ ist zunächst unbekannt, kann aber, insbesondere geometrisch durch den Schnitt des Strahles xs mit einem vorhandenen geometrischen Modell xp der Projektionsfläche, ermittelt werden. Ein vorteilhaftes einfaches Modell einer Projektionsfläche ist insbesondere eine parabolische Projektionsfläche mit xp=(x,y,a^{∗}x^{∗}x+b^{∗}y^{∗}y). Als Ergebnis der Berechnungen erhält man ein unregelmäßiges dreidimensionales Netz mit den Knoten xk, welches jedoch regelmäßige 2D-Texturkoordinaten besitzt.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein virtuelles Netz und dessen zweidimensionale Darstellung, wie es in Verfahren nach dem Stand der Technik benutzt wird,
- Figur 2: eine Skizze eines beispielhaften Ablaufes eines Verfahrens nach dem Stand der Technik,
- Figur 3: ein virtuelles Netz und dessen zweidimensionale Darstellung, wie es in einem Verfahren gemäß einem Ausführungsbeispiel der Erfindung benutzt wird,
- Figur 4: eine schematische Darstellung des Aufbaus eines Steuergeräts gemäß einem Ausführungsbeispiel der Erfindung,
- Figur 5: eine Skizze eines Ablaufes des Verfahrens gemäß dem Ausführungsbeispiel der Erfindung,
- Figur 6: eine erweiterte Skizze des Ablaufes des Verfahrens gemäß dem Ausführungsbeispiel der Erfindung
- Figur 7: eine schematische Darstellung des Aufbaus eines Texturspeichers, wie dieser in dem Verfahren gemäß dem Ausführungsbeispiel verwendet wird, und
- Figur 8: eine schematische Darstellung des Auslesens des Texturspeichers, wie dieser in dem Verfahren gemäß dem Ausführungsbeispiel verwendet wird

### Ausführungsformen der Erfindung

Figur 1 zeigt ein virtuelles Netz 100 gemäß dem Stand der Technik. Das virtuelle Netz 100 stellt eine Projektionsfläche dar, auf das Texturen 200 projiziert werden sollen. Da das virtuelle Netz 100 jedoch ein reguläres dreidimensionales Netz ist, stellt dessen zweidimensionale Repräsentation im Bezug auf die Texturen 200 ein unregelmäßiges zweidimensionales Netzt 300 dar. Dies hat den Nachteil, dass zur Berechnung der Projektion der Textur 200 auf das virtuelle Netz 100 sehr unregelmäßig auf Teile der Textur 200 zugegriffen werden muss.

Dies wird aus Figur 2 noch deutlicher. Figur 2 skizziert den groben Verfahrensablauf bei einer Generierung einer dreidimensionalen Darstellung. In einem ersten Schritt S100 werden die Texturen 200, insbesondere mittels Kameras, aufgenommen, um in einem Texturspeicher gespeichert zu werden. Sobald dieser Speicher vollständige Texturen 200 umfasst, wird in einem zweiten Schritt S200 die dreidimensionale Darstellung gerendert.

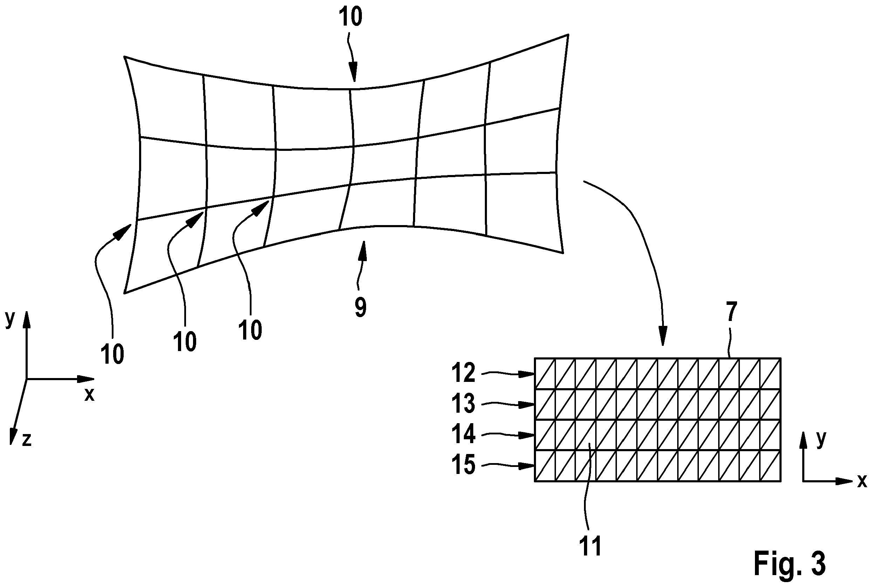

In dem Ausführungsbeispiel des erfindungsgemäßen Verfahrens wird statt einem regulären dreidimensionalen virtuellen Netz ein unregelmäßiges dreidimensionales virtuelles Netzt verwendet. Dies ist in Figur 3 dargestellt. Das virtuelle Netz 9 umfasst mehrere Knotenpunkte 10. Die Knotenpunkte 10 spannen jedoch kein regelmäßiges Netz, sondern ein unregelmäßiges Netz auf. Erst in einer zweidimensionalen Repräsentation ist das virtuelle Netz 9 ein regelmäßiges Netz.

Somit wird erfindungsgemäß eine Textur 7, die auf das virtuelle Netz 9 projiziert werden soll, durch ein regelmäßiges Koordinatennetz 11 beschrieben. Das Projizieren der Textur 7 erfolgt durch ein Verzerren der Textur 7, so dass ein räumlicher Eindruck entsteht. Hier ist insbesondere vorgesehen, dass das Koordinatennetz 11, wenn es auf die gleiche Weise wie die Textur 7 verzerrt würde, genau der Form des virtuellen Netzes 9 entsprechen würde. Somit kann jeder Zelle des regelmäßigen Koordinatennetzes 11 genau eine Zelle des unregelmäßigen virtuellen Netzes 9 zugeordnet werden. Dies erlaubt eine sehr einfache Projektion der Textur 7, da die einzelnen Zellen des Koordinatennetzes 11 direkt den Zellen des virtuellen Netzes 9 entsprechen. So kann sehr einfach eine dreidimensionale Darstellung erzeugt werden.

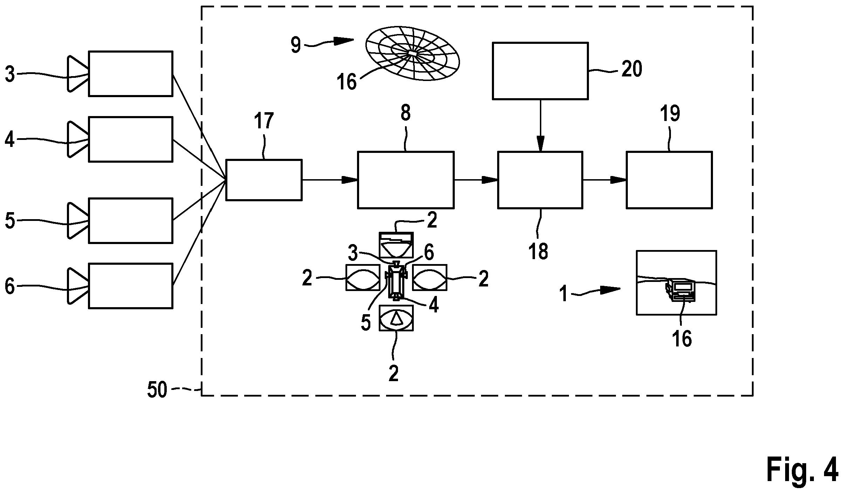

Die dreidimensionale Darstellung wird durch ein Steuergerät 50 gemäß einem Ausführungsbeispiel der Erfindung erzeugt. Das Steuergerät 50 ist schematisch in Figur 4 dargestellt, wobei das Steuergerät insbesondere in einem Fahrzeug vorhanden ist. An das Steuergerät 50 sind eine Frontkamera 3, eine Heckkamera 4, eine linke Seitenkamera 5 und eine rechte Seitenkamera 6 angeschlossen. Die Kameras 3, 4, 5, 6 sind mit einem Bildprozessor 17 verbunden, der aus den übertragenen Daten von den Kameras 3, 4, 5, 6 Texturen 7 erstellt, die anschießend in einem Texturspeicher 8 abgelegt werden. Der Texturspeicher 8 wird von einem Grafikprozessor 18 ausgelesen, wobei der Grafikprozessor 18 aus den Texturen die dreidimensionale Darstellung 1 rendert. Die so erzeugte Darstellung 1 wird von dem Grafikprozessor 18 an eine Ausgabeeinheit 19 übergeben. Die Ausgabeeinheit 19 ist insbesondere ein Zwischenspeicher, der insbesondere mit einem Display verbindbar ist. Zum Rendern der dreidimensionalen Darstellung 1 greift der Grafikprozessor 18 auf ein Modell 20 zurück. Das Modell 20 stellt das virtuelle Netz 9 bereit, wobei das virtuelle Netz 9 insbesondere die Form einer Schale aufweist.

Es ist somit ersichtlich, dass der Grafikprozessor 18 den Texturspeicher 8 ausliest, um die Texturen 7 auf die durch das virtuelle Netz 9 gebildete Projektionsfläche zu projizieren. Dies ist erfindungsgemäß sehr einfach möglich, da die Texturen 7 durch das regelmäßige Koordinatennetz 11 in einzelne Zellen unterteilbar sind, wobei jeder Zelle des Koordinatennetzes 11 eine Zelle des virtuellen Netzes 9 entspricht. Somit muss der Teil der Textur 7, der mit einer Zelle des Koordinatennetzes 11 definiert ist, derart verzerrt werden, dass dieser die Form der korrespondierenden Zelle des virtuellen Netzes 9 einnimmt.

Durch das Koordinatennetz 11 wird die Textur 7 unterteilt. Insbesondere ist vorgesehen, die Textur 7 zeilenweise zu unterteilen, so dass durch das Koordinatennetz 7 eine erste Zeile 12, eine zweite Zeile 13, eine dritte Zeile 14 und eine vierte Zeile 15 definiert werden. Die Zeilen 13, 14, 15, 16 können unabhängig voneinander gerendert werden, da die Projektion einer Zeile 12, 13, 14, 15 auf das virtuelle Netz 9 unabhängig von den übrigen Zeilen 12, 13, 14, 15, ist. Somit muss der Grafikprozessor 18 erfindungsgemäß nicht abwarten, bis die gesamte Textur 7 in dem Texturspeicher 8 vorliegt. Der Texturspeicher 8 muss daher lediglich eine derartige Größe aufweisen, dass nur wenige Zeilen 13, 14, 15, 16 aller Texturen gespeichert werden. Dies sind die Zeilen, die im aktuellen Zeitpunkt gerade für das Rendern der Displaydarstellung benötigt werden. Daher ist es gemäß dem Ausführungsbeispiel der Erfindung möglich, vor Beendigung des Speicherns der Texturen 7 in dem Texturspeicher 8 mit dem Rendern der dreidimensionalen Darstellung 1 zu beginnen.

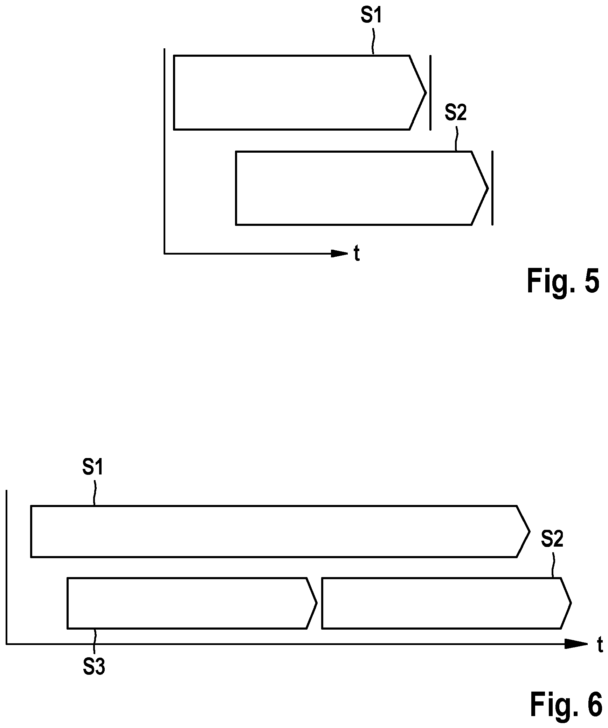

Dies ist in Figur 5 dargestellt. Der erste Schritt S1 und der zweite Schritt S2 entsprechen weitestgehend dem ersten Schritt S100 und dem zweiten Schritt S200 aus dem Stand der Technik. Im Gegensatz zum Stand der Technik erlaubt das erfindungsgemäße Verfahren des Ausführungsbeispiels der Erfindung ein Verschachteln des ersten Schritts S1 und des zweiten Schritts S2. Es ist somit ersichtlich, dass die Gesamtdauer bei dem erfindungsgemäßen Verfahren gemäß dem Ausführungsbeispiel deutlich kürzer ist als im Stand der Technik, da der Texturspeicher 8 gleichzeitig beschrieben und ausgelesen wird.

Figur 6 zeigt einen Fall, in dem zusätzlich zu der dreidimensionalen Darstellung 1 ein weiteres Objekt 16 (vgl. Figur 4) gerendert werden soll. Das Objekt 16 ist insbesondere eine Darstellung eines Ego-Fahrzeugs, das in der dreidimensionalen Darstellung 1 gezeigt werden soll. Gemäß dem Ausführungsbeispiel der Erfindung findet ein dritter Schritt S3, in dem das zusätzliche Objekt 16 gerendert wird, vor dem Rendern der Texturen 7 statt. Während der Wartezeit bis der Texturspeicher 8 ausreichend gefüllt ist wird der Grafikprozessor 18 gemäß dem Ausführungsbeispiel der Erfindung dazu verwendet, die zusätzlichen Objekte 16 zu rendern. Sobald der dritte Schritt S3 abgeschlossen ist, beginnt der Grafikprozessor 18 mit dem Rendern der Texturen 7, was dem zweiten Schritt S2 entspricht. Grundsätzlich ist davon auszugehen, dass nach Ausführen des dritten Schritts S3 der Texturspeicher 8 ausreichend gefüllt ist. Sollte dies nicht der Fall sein und es muss trotz des dritten Schritts S3 Wartezeit überbrückt werden, so wird der Grafikprozessor 18 bis zum Ausführen des zweiten Schritts S2 in einen Leerlauf versetzt.

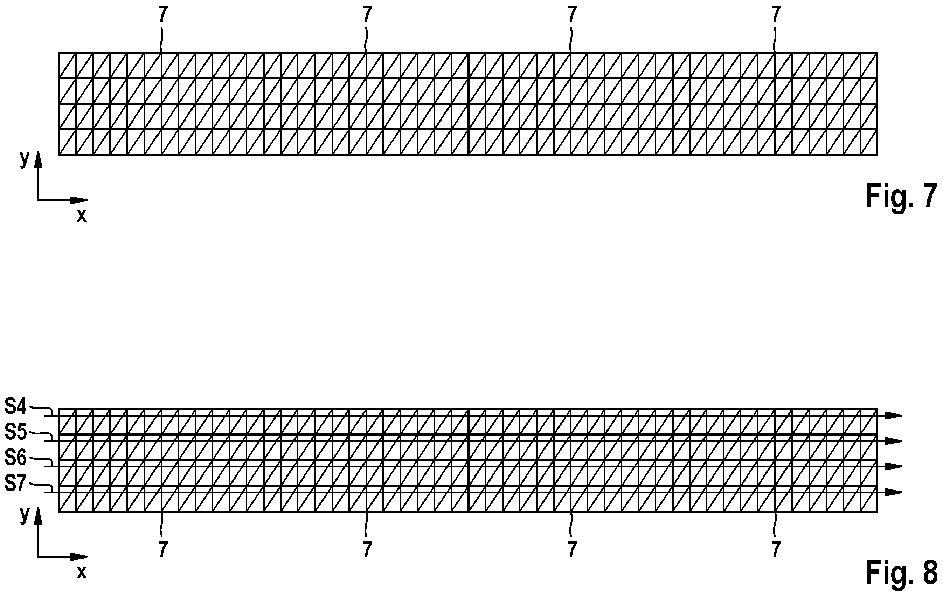

Figur 7 zeigt schematisch einen Aufbau des Texturspeichers 8. Dieser speichert die Texturen 7 der einzelnen Kameras 2, 3, 4, 5 insbesondere sequentiell. Somit werden die Texturen 7 der unterschiedlichen Kameras 2, 3, 4, 5 verschachtelt gespeichert. Ebenso wird das Rendern der dreidimensionalen Darstellung 1 verschachtelt ausgeführt. Dies ist in Figur 8 gezeigt. In einem ersten Renderschritt S4 werden sämtliche erste Zeilen 12 der Texturen 7 der unterschiedlichen Kameras 2, 3, 4, 5 gerendert, in einem zweiten Renderschritt S5 sämtliche zweiten Zeilen 13 der Texturen 7 der unterschiedlichen Kameras 2, 3, 4, 5, in einem dritten Renderschritt S6 sämtliche dritten Zeilen 14 der Texturen 7 der unterschiedlichen Kameras 2, 3, 4, 5, und in einem vierten Renderschritt S7 sämtliche vierten Zeilen 15 der Texturen 7 der unterschiedlichen Kameras 2, 3, 4, 5.

Somit ist es möglich, die von den Kameras erfasste Szenerie sehr schnell in eine dreidimensionale Darstellung 1 umzusetzen. Eine Verzögerung, mit der die dreidimensionale Darstellung 1 die Szenerie wiedergibt, ist nur sehr gering. Ebenso erlaubt das erfindungsgemäße Verfahren gemäß dem gezeigten Ausführungsbeispiel die benötigte Hardware des Steuergeräts 50 auf ein Minimum zu reduzieren. Insbesondere der Speicherbedarf des Texturspeichers 8 wird optimiert.

Neben der schriftlichen Offenbarung wird explizit auf den Offenbarungsgehalt der beigefügten Figuren 1 bis 8 verwiesen.

## Patentansprüche

1. Computerimplementiertes Verfahren zum Generieren einer dreidimensionalen Darstellung (1) einer Szenerie (2), umfassend die Schritte:
• Aufnehmen der Szenerie (2) mit einer Vielzahl von Kameras (3, 4, 5, 6) und Speichern der aufgenommenen Texturen (7) als zweidimensionale Bilder in einem Texturspeicher (8), wobei die Textur (7) durch ein regelmäßiges Koordinatennetzes (11) beschrieben wird, und
• Bereitstellen eines virtuellen Netzes (9), wobei das virtuelle Netz (9) mehrere Knotenpunkte (10) umfasst, welche ein unregelmäßiges Netz (9) aufspannen, und das virtuelle Netz (9) eine virtuelle dreidimensionale Projektionsfläche bildet,
• Rendern der dreidimensionalen Darstellung (1) durch Projizieren der von jeder Kamera (3, 4, 5, 6) bestimmten Texturen (7) auf das virtuelle Netz, wobei die gleichmäßig angeordneten Texturkoordinaten der Texturen (7) auf Knotenpunkte (10) des virtuellen Netzes (9) abgebildet werden, wobei das Projizieren der Texturen (7) auf das virtuelle Netz (9) durch ein Verzerren der Textur (7) erfolgt,
• wobei die Texturen (7) durch das regelmäßige Koordinatennetz (11) in einzelne Zellen unterteilt werden, wobei jeder Zelle des regelmäßigen Koordinatennetzes (11) genau eine Zelle des unregelmäßigen virtuellen Netzes (9) zugeordnet wird, und
• wobei der Teil der Textur (7), der mit einer Zelle des Koordinatennetzes (11) definiert ist, derart verzerrt wird, dass dieser die Form der korrespondierenden Zelle des virtuellen Netzes (9) einnimmt.

2. Verfahren nach einem der vorhergehenden Ansprüche, **dadurch gekennzeichnet, dass** der Schritt des Rendern mit im Texturspeicher (8) verfügbaren Teilbereichen (12, 13, 14, 15) der Texturen (7) stattfindet.

3. Verfahren nach Anspruch 2, **dadurch gekennzeichnet, dass** die Texturen (7) der unterschiedlichen Kameras (3, 4, 5, 6) in dem Texturspeicher (8) verschachtelt gespeichert werden, wobei jeweils identische Teilbereiche (12, 13, 14, 15) der Texturen (7) der unterschiedlichen Kameras (3, 4, 5, 6) sequenziell gerendert werden.

4. Verfahren nach einem der vorhergehenden Ansprüche, **dadurch gekennzeichnet, dass** das virtuelle Netz (9) aus Dreiecken besteht, deren Eckpunkte jeweils den Knotenpunkten (10) des Netzes (9) entsprechen.

5. Computerprogrammprodukt, umfassend einen maschinenlesbaren Code, durch den ein Verfahren nach einem der vorhergehenden Ansprüche ausführbar ist, wenn das Computerprogrammprodukt auf einer Recheneinheit, insbesondere einem Steuergerät, abläuft.

6. Steuergerät (50), insbesondere für ein Fahrzeug, **dadurch gekennzeichnet, dass** auf dem Steuergerät ein Verfahren nach einem der Ansprüche 1 bis 4 ausführbar ist.

## Claims

1. Computer-implemented method for generating a three-dimensional representation (1) of scenery (2), comprising the steps of:
• recording the scenery (2) using a multiplicity of cameras (3, 4, 5, 6) and storing the recorded textures (7) as two-dimensional images in a texture memory (8), wherein the texture (7) is described by a regular coordinate grid (11), and
• providing a virtual grid (9), wherein the virtual grid (9) comprises a plurality of nodes (10) which span an irregular grid (9), and the virtual grid (9) forms a virtual three-dimensional projection area,
• rendering the three-dimensional representation (1) by projecting the textures (7) determined by each camera (3, 4, 5, 6) onto the virtual grid, wherein the uniformly arranged texture coordinates of the textures (7) are mapped to nodes (10) of the virtual grid (9), wherein the textures (7) are projected onto the virtual grid (9) by distorting the texture (7),
• wherein the textures (7) are subdivided into individual cells by the regular coordinate grid (11), wherein precisely one cell in the irregular virtual grid (9) is assigned to each cell in the regular coordinate grid (11), and
• wherein that part of the texture (7) which is defined by a cell in the coordinate grid (11) is distorted in such a manner that it assumes the form of the corresponding cell in the virtual grid (9).

2. Method according to one of the preceding claims, **characterized in that** the rendering step takes place using sections (12, 13, 14, 15) of the textures (7) which are available in the texture memory (8).

3. Method according to Claim 2, **characterized in that** the textures (7) from the different cameras (3, 4, 5, 6) are stored in an interleaved manner in the texture memory (8), wherein identical sections (12, 13, 14, 15) of the textures (7) from the different cameras (3, 4, 5, 6) are rendered sequentially in each case.

4. Method according to one of the preceding claims, **characterized in that** the virtual grid (9) consists of triangles, the corner points of which each correspond to the nodes (10) of the grid (9).

5. Computer program product comprising a machine-readable code which can be used to carry out a method according to one of the preceding claims when the computer program product runs on a computing unit, in particular a control device.

6. Control device (50), in particular for a vehicle, **characterized in that** a method according to one of Claims 1 to 4 can be carried out on the control device.

## Revendications

1. Procédé mis en œuvre par ordinateur pour générer une représentation tridimensionnelle (1) d'une scène (2), comprenant les étapes suivantes :
- l'enregistrement de la scène (2) avec une pluralité de caméras (3, 4, 5, 6) et le stockage des textures enregistrées (7) sous la forme d'images bidimensionnelles dans une mémoire de texture (8), la texture (7) étant décrite par un maillage régulier de coordonnées (11), et
- la fourniture d'un maillage virtuel (9), le maillage virtuel (9) comprenant une pluralité de nœuds (10) qui couvrent un maillage irrégulier (9), et le maillage virtuel (9) formant une surface de projection virtuelle tridimensionnelle,
- la restitution de la représentation tridimensionnelle (1) par projection sur le maillage virtuel des textures (7) déterminées par chaque caméra (3, 4, 5, 6), les coordonnées de texture agencées régulièrement des textures (7) étant représentées sur des nœuds (10) du maillage virtuel (9), la projection des textures (7) sur le maillage virtuel (9) s'effectuant par déformation de la texture (7),
- dans lequel les textures (7) sont divisées en cellules individuelles par le maillage de coordonnées régulier (11), exactement une cellule du maillage virtuel irrégulier (9) étant associée à chaque cellule du maillage de coordonnées régulier (11), et
- dans lequel la partie de la texture (7) qui est définie par une cellule du maillage de coordonnées (11) est déformée de manière à prendre la forme de la cellule correspondante du maillage virtuel (9).

2. Procédé selon l'une des revendications précédentes, **caractérisé en ce que** l'étape de restitution a lieu avec des zones partielles (12, 13, 14, 15) des textures (7) disponibles dans la mémoire de texture (8).

3. Procédé selon la revendication 2, **caractérisé en ce que** les textures (7) des différentes caméras (3, 4, 5, 6) sont stockées de manière entrelacée dans la mémoire de texture (8), des zones partielles (12, 13, 14, 15) identiques des textures (7) des différentes caméras (3, 4, 5, 6) étant respectivement restituées séquentiellement.

4. Procédé selon l'une des revendications précédentes, **caractérisé en ce que** le maillage virtuel (9) est constitué de triangles dont les sommets correspondent respectivement aux nœuds (10) du maillage (9) .

5. Produit de programme d'ordinateur comprenant un code lisible par machine au moyen duquel un procédé selon l'une des revendications précédentes peut être mis en œuvre lorsque le programme d'ordinateur est exécuté sur une unité informatique, en particulier un appareil de commande.

6. Appareil de commande (50), en particulier pour un véhicule, **caractérisé en ce qu'**un procédé selon l'une des revendications 1 à 4 peut être mis en œuvre sur l'appareil de commande.
